# EUROPÄISCHE PATENTSCHRIFT

(11) **EP 4 417 538 B1**
(45) Veröffentlichungstag und Bekanntmachung des Hinweises auf die Patenterteilung: **26.03.2025**
(21) Anmeldenummer: 23215493.0
(22) Anmeldetag: 11.12.2023
(51) Int. Cl.: B65D 77/20, B29C 45/00

(54) **VERFAHREN ZUR HERSTELLUNG EINES VERPACKUNGS-DECKELS UND DAMIT HERGESTELLTER VERPACKUNGS-DECKEL**
METHOD FOR PRODUCING A PACKAGING LID AND PACKAGING LID PRODUCED THEREBY
PROCÉDÉ DE FABRICATION D'UN COUVERCLE D'EMBALLAGE ET COUVERCLE D'EMBALLAGE FABRIQUÉ SELON CE PROCÉDÉ

(30) Priorität: 16.02.2023 DE 102023103885
(43) Veröffentlichungstag der Anmeldung: 21.08.2024
(73) Patentinhaber: Spies Kunststoffe GmbH, 49326 Melle (DE)
(72) Erfinder: Pöhls, Guido, 72555 Metzingen (DE)
(74) Vertreter: Truckenmüller, Frank

(56) Entgegenhaltungen:
- EP-A1- 2 202 174
- EP-A1- 2 319 675
- EP-A1- 2 899 130

## Beschreibung

Die Erfindung betrifft ein Verfahren zur Herstellung eines Verpackungs-Deckels für eine Verpackung zum Verschließen einer Behälteröffnung eines Verpackungs-Behälters für die Verpackung zur Aufnahme von festen, pastösen, fließ- und/oder schöpffähigen Produkten, insbesondere Lebensmittelprodukten gemäß dem Oberbegriff des Anspruches 1. Die Erfindung betrifft auch einen Verpackungs-Deckel, der nach dem erfindungsgemäßen Verfahren hergestellt ist. Ferner betrifft die Erfindung ein Verfahren zur Herstellung einer Verpackung, die einen erfindungsgemäß hergestellten Verpackungs-Deckel enthält. Außerdem betrifft die Erfindung eine Verpackung, die nach dem erfindungsgemäßen Verfahren hergestellt ist. Schließlich betrifft die Erfindung ein Verfahren zum Öffnen der Verpackung.

### Technologischer Hintergrund und Stand der Technik

Heute werden Kunststoffverpackungen in der Regel mit Aluminiumfolien oder Kunststofffolien versiegelt und mit einem optionalen Kunststoffdeckel zum späteren Wiederverschließen verwendet. Durch die Verwendung von Aluminiumfolien ist das Recycling eingeschränkt, da der Verbraucher diese regelmäßig nicht komplett vom Kunststoffbehälter trennt. Das kommt ursächlich daher, dass die Aluminiumfolie sich problemlos biegen lässt und somit über die Lasche der Behälter nur eingeschränkt wieder verschlossen werden kann. Bei der Verwendung von Kunststoffplatinen ist ein bedingter Wiederverschluss nicht möglich, da sich die flexiblen Folien nicht dauerhaft umbiegen lassen und ein Wiederverschluss so unmöglich wird. Des Weiteren gibt es siegelbare Deckel, welche eine außenliegende IML-Folie (IML = in mould labelling) als Siegelmedium verwenden, die durch die Technik des Etiketten-Über- bzw. Hinterspritzens hergestellt ist. Diese sind dadurch gekennzeichnet, dass der feste Kunststoffkorpus im Bereich der Siegelflächen unterbrochen ist. In diesen Bereichen ist die Folie wellig, da beim Spritzgussprozess das verspritzte Material schrumpft, die eingelegte Folie aber nicht. Solche Verpackungs-Deckel sind beispielsweise aus der EP 1 475 314 A1 und der EP 1 693 309 A1 bekannt geworden.

Aus der FR 2 2 827 841 A ist ein Behälterdeckel bekannt geworden, der einen umlaufenden, geschlossenen Klemmrand aufweist. Der Klemmrand umschließt eine Öffnung, die nach oben offen ist und die nach unten durch einen Folienzuschnitt verschlossen ist. Der Folienzuschnitt überlappt den Klemmrand teilweise und ist im Überlappungsbereich mit dem Klemmrand fest verbunden. Der Folienzuschnitt wird durch Spritzgießen mit dem Klemmrand verbunden, indem der Folienzuschnitt mit einem fließfähigen Polymer über- bzw. hinterspritzt wird. Der Folienzuschnitt kann aus einer bedruckbaren Polymer-Folie bestehen. Der Folienzuschnitt ist auf seiner Unterseite mit einer bedruckbaren Unterschicht aus einem abziehbaren Polymer versehen, die mit einem Behälterrand eines Behälters mittels thermischen Schweißens versiegelbar ist, so dass eine Behälteröffnung des Behälters dicht verschlossen ist. Wenn der Behälterdeckel mit dem Behälterrand des Behälters versiegelt ist und zum Zwecke eines Zugangs zu der Behälteröffnung geöffnet wird, also von dem Behälterrand des Behälters abgezogen wird, ist es ein Ziel, dass der Klemmrand, der Folienzuschnitt und ein Teil der abziehbaren Unterschicht mit dem Behälterdeckel verbunden bleibt. Beim Öffnen bzw. Abziehen des Behälterdeckels kann es zu einem unkontrollierten Aufreißen nicht nur der Unterschicht, sondern auch des Folienzuschnitts kommen, so dass der Behälter anschließend nicht wieder sicher mit dem Behälterdeckel verschlossen werden kann.

Aus der EP 2 202 174 A1 ist ein Verfahren bekannt geworden. Dort ist ein Behälterdeckel in Form einer einzigen Schicht oder in Form einer Mehrfachschicht offenbart. Der Behälterdeckel kann mit Hilfe verschiedener Techniken, beispielsweise mittels Spritzgießen, hergestellt werden. Gemäß der technischen Lehre dieser Druckschrift umfasst der Behälterdeckel eine Siegelzone zum Zusammenfügen mit mindestens einem Teil des Behälters, die ein abziehbares Siegel mit dem Behälter bereitstellt und im Vergleich zu den restlichen Teilen des Deckels eine verringerte Wanddicke aufweist, wobei die abziehbare Siegelverbindung zwei miteinander unverträgliche bzw. inkompatible Polymere umfasst. Die abziehbare Siegelverbindung kann durch eine IML-Folie bereitgestellt werden. Der Behälterdeckel kann durch die Technik des Etiketten-Über- bzw. Hinterspritzens ("in mould labelling") hergestellt werden bzw. sein. Der Behälterdeckel kann eine Substratschicht aus einer spritzgegossenen Schicht aus einem thermoplastischen Polymer und eine IML-Folie aufweisen, die unmittelbar auf der Substratschicht auf deren Außenseite angeordnet ist. Vorzugsweise ist die Substrat-Schicht als die am weitesten innen liegende Schicht des Behälterdeckels ausgebildet bzw. angeordnet, die beim Versiegeln im Erstkontakt mit dem Behälter kommt. Dadurch kann der Behälterdeckel eine größere Steifigkeit und gute Siegel-Eigenschaften aufweisen. Die IML-Folie kann auf beiden Seiten der Substratschicht angebracht werden bzw. sein. Dieses Verfahren bzw. der damit hergestellte Behälterdeckel hat den Nachteil, dass der Behälterdeckel eine Siegelzone mit einer abziehbaren Dichtungsmasse umfasst, wobei deren Wandstärke im Vergleich zu der des übrigen Teils zwingend verringert sein muss, um einen effizienten Wärmeübergang durch die Siegelzone des Deckels während des Heißsiegelns zu gewährleisten und um eine ordnungsgemäße Abdichtung zwischen dem Deckel und dem Behälter in einer kurzen Siegelzeit zu erzielen. Außerdem muss die abziehbare Siegelzone zwingend zwei miteinander unverträgliche bzw. inkompatible Polymere enthalten, um zu ermöglichen, dass der Deckel einigermaßen definiert in der Siegelzone und möglichst nicht im umgebenden Material geöffnet wird und dass das Material um die Siegelzone herum möglichst nicht zerstört wird. In der Praxis kann es aber ausgehend von dem mittels des Behälterdeckels versiegelten Behälters dennoch zu einem unkontrollierten Aufreißen des Behälterdeckels kommen, so dass der

Behälter anschließend nicht wieder sicher mit dem Behälterdeckel verschlossen werden kann. EP 2 899 130 A1 offenbart ein Verfahren gemäß dem Oberbegriff vom Anspruch 1.

### Zusammenfassung der Erfindung

Der Erfindung liegt die Aufgabe zugrunde, ein Verfahren zur Herstellung eines Verpackungs-Deckels für eine Verpackung zum Verschließen einer Behälteröffnung eines Verpackungs-Behälters für die Verpackung zur Verfügung zu stellen, der besonders vorteilhafte Möglichkeiten für ein sortenreines Recycling und für einen geringen Materialeinsatz bietet, der vollständig oder teilweise besonders einfach und leicht von dem Verpackungs-Behälter derart ablösbar bzw. abziehbar ist, dass ein definiertes Öffnen des Verpackungs-Deckels von dem Verpackungs-Behälter im Versiegelungsbereich ohne eine Beschädigung von benachbartem Deckelmaterial möglich ist, der vorteilhafte Möglichkeiten zum Stapeln mit gleichen oder gleichartigen Verpackungs-Deckeln und dementsprechende Transport- und Kostenvorteile bietet und der sowohl vor seinem Versiegeln mit dem Verpackungs-Behälter als auch nach seinem Ablösen bzw. Abziehen von dem Verpackungs-Behälter einfach und leicht handhabbar ist und der nach seinem Ablösen bzw. Abziehen von dem Verpackungs-Behälter wieder sicher lösbar verschließbar ist.

Diese Aufgabe wird durch die Merkmale des Anspruches 1 gelöst. Demgemäß betrifft die Erfindung ein Verfahren zur Herstellung eines Verpackungs-Deckels für eine Verpackung zum Verschließen einer Behälteröffnung eines Verpackungs-Behälters für die Verpackung zur Aufnahme von festen, pastösen, fließ- und/ oder schöpffähigen Produkten, insbesondere Lebensmittelprodukten, wobei der Verpackungs-Deckel dazu konfiguriert ist, an dem Verpackungs-Behälter lösbar befestigt zu werden, vorzugsweise und nach dem Lösen mit dem Verpackungs-Behälter wieder lösbar verschließbar zu sein bzw. verschlossen zu werden, und wobei der Verpackungs-Deckel einen um ein Deckel-Zentrum umlaufenden, vorzugsweise geschlossenen, Deckelteil, insbesondere Deckelrand, aufweist, der dazu konfiguriert ist, mittels einer, vorzugsweise unter Anwendung eines thermischen Verfahrens und/oder unter Anwendung eines Ultaschallverfahrens, beispielsweise durch thermisches Schweißen oder durch Ultraschallschweißen, hergestellten, Siegelverbindung, beispielsweise einer Schmelz- und/oder Klebeverbindung, mit einem um die Behälteröffnung des Verpackungs-Behälters umlaufenden, vorzugsweise geschlossenen, Behälterteil, insbesondere Behälterrand, des Verpackungs-Behälters derart verbunden zu werden, dass der Verpackungs-Behälter durch den Verpackungs-Deckel gegen ein Austreten eines sich in dem Verpackungs-Behälter befindlichen Produkts aus dem Verpackungs-Behälter und/oder gegen einen Zutritt von Stoffen wie Flüssigkeiten, insbesondere Wasser, und/oder Gasen, insbesondere Luft, in den Verpackungs-Behälter, vorzugsweise hermetisch, dicht verschlossen ist, und wobei der Verpackungs-Deckel eine Deckel-Oberseite und eine davon wegweisende Deckel-Unterseite aufweist, und wobei der Verpackungs-Deckel unter Verwendung einer vorgefertigten Folie, insbesondere einer IML-Folie, aus Kunststoff hergestellt wird und einen Folien-Träger aus Kunststoff für die Folie aufweist, der steifer und/oder dicker ist als die Folie aus Kunststoff und der eine der Deckel-Oberseite zugeordnete Folien-Träger-Oberseite und eine davon weg weisende, der Deckel-Unterseite zugeordnete Folien-Träger-Unterseite aufweist, an der die vorgefertigte Folie unmittelbar an dem Folien-Träger durch Über- oder Hinterspritzen mittels einer fließfähigen Kunststoffmasse mittels Spritzgießen, insbesondere im IML-Verfahren, befestigt wird, vorzugsweise wobei oder so dass der Verpackungs-Deckel in einem einzigen Spritzgießvorgang bzw. Schuss, insbesondere in einer einzigen Kavität bzw. Spritzgußform eines Spritzgießwerkzeugs, hergestellt wird, vorzugsweise wobei zur Herstellung des Verpackungs-Deckels die vorgefertigte Folie aus Kunststoff in eine Kavität eines offenen Spritzgießwerkzeugs eingelegt wird und nach dem Schließen des Spritzgießwerkzeugs in dem geschlossenen Spritzgießwerkzeug mit einer fließfähigen Kunststoffmasse, vorzugsweise mit einer thermoplastischen Kunststoffschmelze, angespritzt und/oder hinterspritzt wird, so dass aus der fließfähigen Kunststoffmasse, ggf. nach einem Abkühlvorgang, der Folien-Träger aus Kunststoff ausgebildet wird, an dem die vorgefertigte Folie unmittelbar befestigt ist, die zusammen mit dem sie tragenden Folien-Träger den separat handhabbaren, integralen Verpackungs-Deckel ausbilden, und wobei der Verpackungs-Deckel eine durch die vorgefertigte Folie aus Kunststoff bereitgestellte Versiegelungszone zum Verbinden oder Zusammenfügen mindestens des umlaufenden Deckelteils des Verpackungs-Deckels mit dem umlaufenden Behälterteil des Verpackungs-Behälters aufweist, vorzugsweise wodurch eine ablösbare bzw. abziehbare Versiegelung mit dem Verpackungs-Behälter bereitgestellt wird, und wobei die Versiegelungszone eine ablösbare bzw. abziehbare Versiegelungsmasse aufweist, die dazu konfiguriert ist, ausgehend von dem mittels des Verpackungs-Deckels verschlossenen und mittels der Siegelverbindung, vorzugsweise hermetisch, dicht versiegelten Verpackungs-Behälter ein, vorzugsweise manuelles, Ablösen oder Abziehen zumindest eines Verpackungs-Deckel-Teils des umlaufenden Deckelteils des Verpackungs-Deckels von dem umlaufenden Behälterteil des Verpackungs-Behälters zu ermöglichen und dadurch einen Zugang zu der Behälteröffnung des Behälters zu ermöglichen, und wobei die Versiegelungsmasse zumindest im Bereich des ersten Deckel-Teils des Verpackungs-Deckels auf der Folien-Träger-Unterseite des Folien-Trägers unmittelbar oder mittelbar an dem Folien-Träger befestigt wird oder ist, und wobei die vorgefertigte Folie aus Kunststoff während des Spritzgießens bzw. während der Füllung der Kaviatät des geschlossenen Spritzgießwerkzeugs mit der fließfähigen Kunststoffmasse, durch die fließfähige Kunststoffmasse, insbesondere durch die thermoplastische Schmelze, in einen dem umlaufenden Deckelteil zugeordneten, umlaufenden, vorzugsweise ringförmigen, insbesondere geschlossenen, ersten Folienteil der Folie und in einen, vorzugsweise dem Deckel-Zentrum zugeordneten, insbesondere zentralen, zweiten Folienteil der Folie getrennt wird, so dass der fertige Verpackungs-Deckel den umlaufenden ersten Folienteil der Folie und den zweiten Folienteil der Folie aufweist, die durch einen aus der fließfähigen Kunststoffmasse hergestellten, vorzugsweise sich von der Folien-Träger-Oberseite quer oder senkrecht, insbesondere nach unten, weg erstreckenden, umlaufenden, insbesondere ringförmigen, vorzugsweise geschlossenen, Trenn-Rand aus Kunststoff voneinander getrennt in einem Abstand zueinander angeordnet sind.

Wenn der mit dem Behälterrand des Verpackungs-Behälters versiegelte Verpackungs-Deckel zumindest teilweise von dem Behälterrand des Verpackungs-Behälters abgelöst bzw. abgezogen wird, wird durch die erfindungsgemäßen Maßnahmen erreicht, dass der zweite, zentrale Folienteil vollständig und fest mit dem Verpackungs-Deckel verbunden verbleibt.

Gemäß einer bevorzugten Verfahrensvariante kann vorgesehen sein, dass der Verpackungs-Deckel durch Spritzgießen der fließfähigen Kunststoffmasse, vorzugsweise der thermoplatischen Kunststoffschmelze, von einem einzigen, vorzugsweise dem Deckel-Zentrum zugeordneten zentralen, Anspritzpunkt aus hergestellt wird. Dadurch ist eine besonders einfache Herstellung in kürzerer Zykluszeit und eine dementsprechend kostengünstige Herstellung ermöglicht.

Die Erfindung betrifft auch einen Verpackungs-Deckel, der nach dem erfindungsgemäßen Verfahren hergestellt ist.

Gemäß einer vorteilhaften Weiterbildung kann vorgesehen sein, dass es sich bei der Folie aus Kunststoff um eine aus mehreren, vorzugsweise parallelen, Schichten bestehende Mehrschicht-Folie handelt, die eine erste Folienschicht und eine zweite Folienschicht umfasst, wobei es sich bei der ersten Folienschicht um die ablösbare bzw. abziehbare Versiegelungsmasse handelt, und wobei es sich bei der zweiten Folienschicht um eine Siegelschicht zur Herstellung der Siegelverbindung, vorzugsweise unter Anwendung eines thermischen Verfahrens und/oder unter Anwendung eines Ultaschallverfahrens, zwischen dem umlaufenden Deckelteil bzw. Deckelrand und dem umlaufenden Behälterteil bzw. Behälterrand des Verpackungs-Behälters, also zum Versiegeln des Verpackungs-Deckels mit dem umlaufenden Behälterteil des Verpackungs-Behälters, handelt.

Dabei kann gemäß einer besonders bevorzugten Ausgestaltung vorgesehen sein, dass die aus der ablösbaren bzw. abziehbaren Versiegelungsmasse bestehende erste Folienschicht der Mehrschicht-Folie auf der Folien-Träger-Unterseite des Folien-Trägers unmittelbar an dem Folien-Träger befestigt wird oder ist und dass die als Siegelschicht ausgebildete zweite Folienschicht der Mehrschicht-Folie die Deckel-Unterseite des Verpackungs-Deckels ausbildet. Dies ermöglicht eine besonders vorteilhafte und flexible Anwendung des Ultraschallschweißens zum Versiegeln des Verpackungs-Deckels mit dem Verpackungs-Behälter. Dabei ist durch die besagten Maßnahmen sichergestellt, dass beim Öffnen bzw. Ablösen oder Abziehen wesentlicher Verpackungs-Deckel-Teile des Verpackungs-Deckels von dem umlaufenden Behälterteil bzw. Behälterrand des Verpackungs-Behälters der Folien-Träger von dem umlaufenden Behälterteil bzw. Behälterrand des Behälters im Wesenltichen rückstandsfrei ablösbar bzw. abziehbar ist, während die Siegelschicht vollständig an dem Behälterrand des Verpackungs-Behälters haften bzw. versiegelt bleibt.

Gemäß einer vorteilhaften Weiterbildung kann vorgesehen sein, dass der umlaufende Trenn-Rand sich quer oder senkrecht zu dem Folien-Träger von der Folien-Träger-Oberseite weg nach unten erstreckt.

Gemäß einer besonders bevorzugten Ausgestaltung kann vorgesehen sein, dass der umlaufende Trenn-Rand als ein Klemmrand zum reibschlüssigen und wieder lösbaren Verschließen der Behälteröffnung des Verpackungs-Behälters durch Festklemmen bzw. mittels Klemmkräften ausgebildet ist und/oder als ein erster Stapelrand zum Stapeln mehrerer gleicher Verpackungs-Deckel aufeinander ausgebildet ist. Wenn der umlaufende Trenn-Rand als ein Klemmrand zum reibschlüssigen und wieder lösbaren Verschließen der Behälteröffnung des Verpackungs-Behälters durch Festklemmen bzw. mittels Klemmkräften ausgebildet ist, kann vorteilhaft ein ansonsten für ein Wiederverschließen des geöffneten Verpackungs-Deckels erforderlicher ganz oder teilweise um das Deckel-Zentrum umlaufender, äußerer bzw. außenseitiger Kragen zum Festklemmen und/oder Verrasten mit dem Behälterrand des Verpackungs-Behälters entfallen. Dadurch können Material und Kosten eingespart werden.

Gemäß einer vorteilhaften Weiterbildung kann vorgesehen sein, dass der erste Stapelrand ein umlaufendes, insbesondere ringförmiges, vorzugsweise geschlossenes, freies Stapelrand-Ende aufweist, das einen Innendurchmesser aufspannt, und dass der Verpackungs-Deckel einen sich von dem ersten Stapelrand, vorzugsweise in einer Richtung quer oder senkrecht zu dem Folien-Träger von der Folien-Träger-Oberseite, weg nach oben erstreckenden, zweiten Stapelrand aufweist, der einen Außendurchmesser aufspannt, der geringfügig kleiner ist als der von dem freien Stapelrand-Ende des ersten Stapelrands aufgespannte Innendurchmesser. Dadurch können mehrere gleiche Verpackungs-Deckel gegen ein Verschieben relativ zueinander, insbesondere transportsicher, aufeinander gestapelt werden. Es ist also eine Fixierung von aufeinander gestapelten gleichen Verpackungs-Deckeln relativ zueinander ermöglicht.

Die Erfindung betrifft auch ein Verfahren zur Herstellung einer Verpackung, umfassend einen erfindungsgemäßen bzw. erfindungsgemäß hergestellten Verpackungs-Deckel und umfassend einen Verpackungs-Behälter mit einer Behälteröffnung zur Aufnahme von festen, pastösen, fließ- und/oder schöpffähigen Produkten, insbesondere Lebensmittelprodukten, wobei der Verpackungs-Behälter einen um seine Behälteröffnung umlaufenden, insbesondere ringförmigen, vorzugsweise geschlossenen, Behälterteil, insbesondere Behälterrand, aufweist und der Verpackungs-Deckel den um das Deckel-Zentrum und um die Behälteröffnung umlaufenden, insbesondere ringförmigen, vorzugsweise geschlossenen Deckelteil, inbesondere Deckelrand aufweist, der an dem umlaufenden Behälterteil des Verpackungs-Behälters wieder lösbar befestigt wird, wobei der umlaufende Deckelteil des Verpackungs-Deckels, vorzugsweise unter Anwendung eines thermischen Verfahrens und/ oder unter Anwendung eines Ultaschallverfahrens, insbesonders durch thermisches Schweißen oder durch Ultraschallschweißen, unter Ausbildung der Siegelverbindung mit dem umlaufenden Behälterteil des Verpackungs-Behälters versiegelt wird, so dass der Verpackungs-Behälter mittels des Verpackungs-Deckels, vorzugsweise hermetisch, dicht verschlossen wird oder ist, der an dem Verpackungs-Behälter wieder lösbar befestigt wird oder ist.

Die Erfindung betrifft auch eine Verpackung, die nach dem erfindungsgemäßen Verfahren zur Herstellung der Verpackung hergestellt ist.

Gemäß einer besonders vorteilhaften Ausgesteltung der Verpackung kann vorgesehen sein, dass der als ein Klemmrand ausgebildete, umlaufende Trenn-Rand des Verpackungs-Deckels an einer die Behälteröffnung, vorzugsweise radial, nach außen begrenzenden Innenwand des Verpackungs-Behälters durch Festklemmen reibschlüssig wieder lösbar anliegt bzw. unter Ausbildung von Klemmkräften wieder lösbar festgeklemmt ist. Ein ansonsten für ein Wiederverschließen des geöffneten Verpackungs-Deckels erforderlicher ganz oder teilweise um das Deckel-Zentrum umlaufender, äußerer bzw. außenseitiger Kragen zum Festklemmen und/oder Verrasten mit dem Behälterrand des Verpackungs-Behälters entfallen. Dadurch können Material und Kosten eingespart werden.

Die Erfindung betrifft auch ein Verfahren zum Öffnen der erfindungsgemäßen bzw. erfindungsgemäß hergestellten Verpackung, wobei zumindest der den Folien-Träger und den mit diesem einteilig verbundenen, umlaufenden Trenn-Rand enthaltenden Verpackungs-Deckel-Teil des umlaufenden Deckelteils des Verpackungs-Deckels von dem umlaufenden Behälterteil bzw. Behälterrand des Verpackungs-Behälters teilweise oder ganz derart abgelöst oder abgezogen wird, dass dabei der umlaufende erste Folienteil der Folie, der, in einer ersten Richtung zu dem Deckel-Zentrum hin betrachtet, von dem umlaufenden Trenn-Rand nach innen begrenzt ist, zumindest teilweise mit dem umlaufenden Behälterteil des Verpackungs-Behälters versiegelt bleibt, während der zweite Folienteil der Folie, der, in einer zweiten Richtung von dem Deckel-Zentrum weg betrachtet, von dem umlaufenden Trenn-Rand nach außen begrenzt ist, vorzugsweise unzerstört, mit dem Folien-Träger verbunden bleibt.

Es versteht sich, dass die vorgenannten Maßnahmen im Rahmen der Ausführbarkeit beliebig miteinander kombinierbar sind.

Ein vorteilhaftes Ausführungsbeispiel der Erfindung ist nachfolgend anhand der Figuren beschrieben.

### Kurzbeschreibung der Figuren

Es zeigen:
- Fig. 1: einen Verpackungs-Deckel in einer dreidimensionalen Darstellung schräg von oben;
- Fig. 2: den Verpackungs-Deckel gemäß Figur 1 in einer dreidimensionalen Darstellung schräg von unten;
- Fig. 3: einen vergrößerten Ausschnitt des Verpackungs-Deckels in einem Querschnitt;
- Fig. 4: einen stark vergrößerten Ausschnitt des Verpackungs-Deckels gemäß Figur 3;
- Fig. 5: einen Verpackungs-Behälter, der mittels des in den Figuren 1 bis 4 gezeigten Verpackungs-Deckels versiegelbar ist;
- Fig. 6: eine Verpackung umfassend den in den Figuren 1 bis 4 gezeigten Verpackungs-Deckel und umfassend den in Figur 5 gezeigten Verpackungs-Behälter, der mittels des Verpackungs-Deckels versiegelt ist;
- Fig. 7: den Verpackungs-Deckel bzw. die Verpackung in einer zweidimensionalen Draufsicht von oben;
- Fig. 8: die Verpackung in einem in dieser Figur vertikale Zentralachse bzw. Rotationsachse enthaltenden Querschnitt;
- Fig. 9: einen vergrößerten Ausschnitt der Verpackung in einem Querschnitt;
- Fig. 10: einen stark vergrößerten Ausschnitt der Verpackung gemäß Figur 9.

### Detaillierte Beschreibung der Figuren

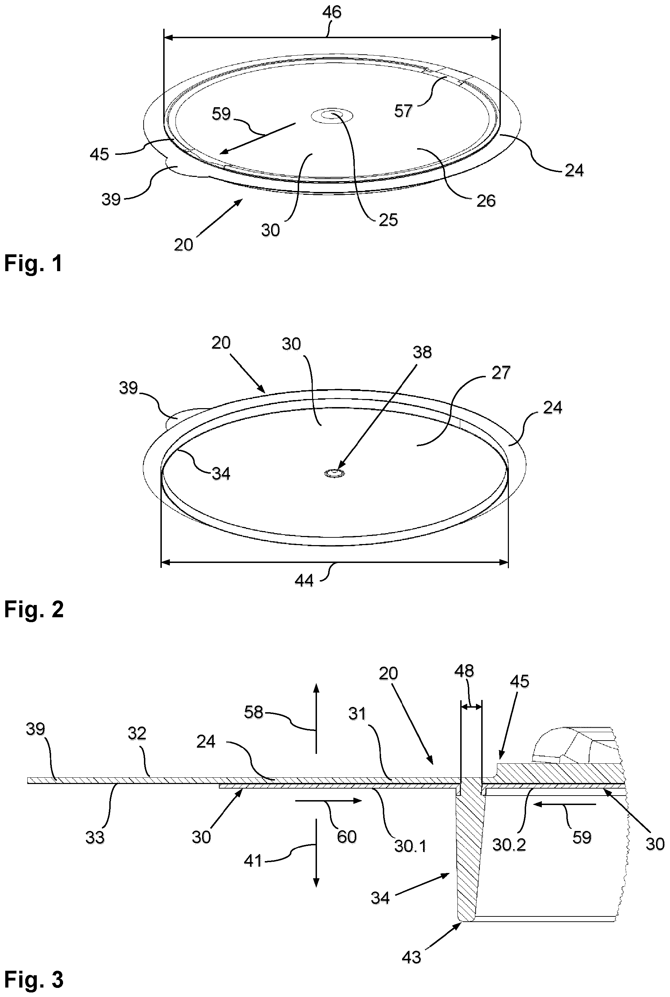

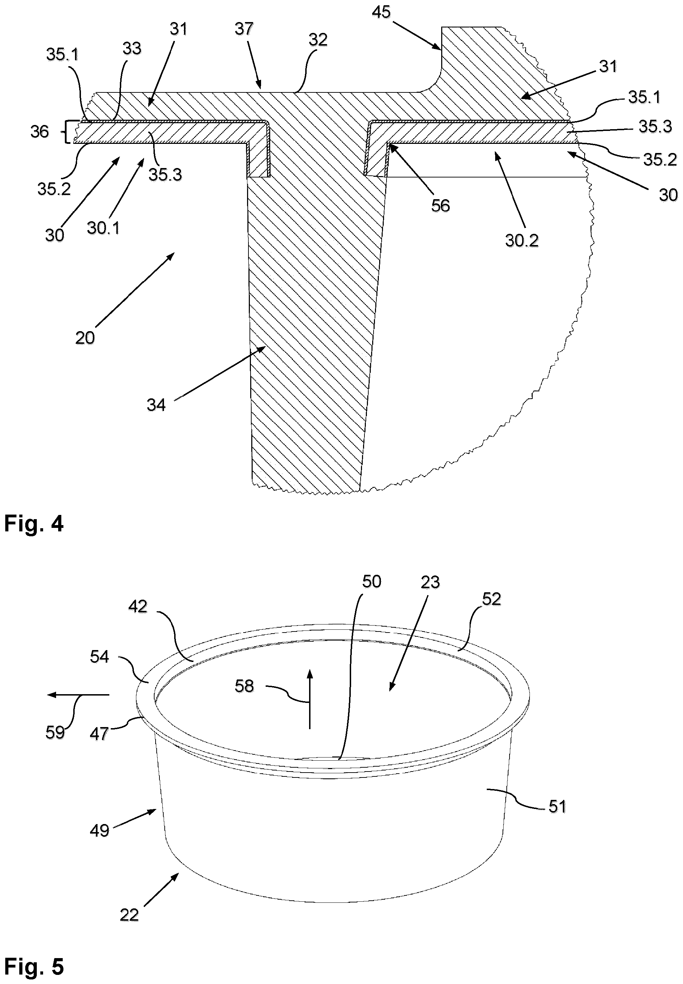

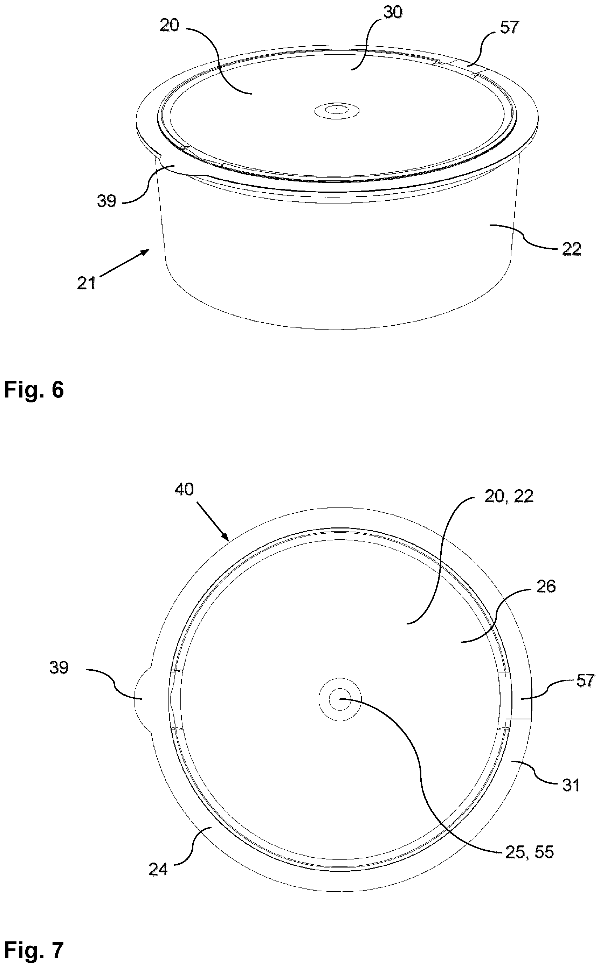

In den Figuren 1 bis 4 ist ein nach dem erfindungsgemäßen Verfahren hergestellter Verpackungs-Deckel 20 für eine in Figur 6 gezeigte Verpackung 21 zum Verschließen einer Behälteröffnung 23 eines in Figur 5 gezeigten Verpackungs-Behälters 22 für die Verpackung 21 zur Aufnahme von festen, pastösen, fließfähigen und/oder schöpffähigen Produkten, insbesondere Lebensmittelprodukten, gezeigt. Der Verpackungs-Deckel 20 kann auch als ein Verschluss-Deckel bezeichnet werden. Der Verpackungs-Deckel 20 ist dazu konfiguriert, an dem Verpackungs-Behälter 22 lösbar befestigt zu werden und nach dem Ablösen bzw. Abziehen von dem Verpackungs-Behälter 22 wieder mit dem Verpackungs-Behälter lösbar verschließbar zu sein bzw. verschlossen zu werden. Der Verpackungs-Deckel 20 weist einen um ein Deckel-Zentrum 25 umlaufenden, geschlossenen Deckelteil 24 in Form eines Deckelrands auf. Der umlaufende Deckelteil 24 bzw. Deckelrand ist dazu konfiguriert, mittels einer, vorzugsweise unter Anwendung eines Ultaschallverfahrens, insbesondere unter Anwendung von Ultraschallschweißen, und/oder unter Anwendung eines thermischen Verfahrens, insbesondere unter Anwendung von thermischem Schweißen, hergestellten, Siegelverbindung 28, beispielsweise einer Schmelz- und/oder Klebeverbindung, mit einem um die Behälteröffnung 23 des Verpackungs-Behälters 22 umlaufenden Behälterteil 47 in Form des Behälterrands des Verpackungs-Behälters 22 derart verbunden zu werden, dass der Verpackungs-Behälter 22 durch den Verpackungs-Deckel 20, insbesondere gegen ein Austreten eines sich in dem Verpackungs-Behälter 22 befindlichen Produkts aus dem Verpackungs-Behälter 22 und/oder gegen einen Zutritt von Stoffen wie Flüssigkeiten, insbesondere Wasser, und/oder Gasen, insbesondere Luft, in den Verpackungs-Behälter 22, hermetisch dicht verschlossen ist. Der Verpackungs-Deckel 20 weist eine Deckel-Oberseite 26 und eine davon wegweisende Deckel-Unterseite 27 auf. Der Verpackungs-Deckel 20 wird bzw. ist unter Verwendung einer, vorzugsweise bedruckbaren bzw. bedruckten, Folie 30 aus Kunststoff hergestellt. Der Verpackungs-Deckel 20 weist einen Folien-Träger 31 aus Kunststoff für die Folie 30 auf. Der Folien-Träger 31 aus Kunststoff ist dicker und steifer als die Folie 30 aus Kunststoff. Der Folien-Träger 31 weist eine der Deckel-Oberseite 26 zugeordnete Folien-Träger-Oberseite 32 und eine davon weg weisende, der Deckel-Unterseite 27 zugeordnete Folien-Träger-Unterseite 33 auf. An der Folien-Träger-Unterseite 33 des Folien-Trägers 31 wird bzw. ist die Folie 30 aus Kunststoff unmittelbar an dem Folien-Träger 31 durch Über- bzw. Hinterspritzen mit einer nicht gezeigten fließfähigen Kunststoffmasse, bei der es sich um eine thermoplastische Kunststoffschmelze handelt, mittels Spritzgießen im IML-Verfahren befestigt. Die Folie 30 kann auch als IML-Folie bezeichnet werden. Dabei wird bzw. wurde der Verpackungs-Deckel 20 in einem einzigen Spritzgießvorgang bzw. Schuss in einer nicht gezeigten einzigen Kavität bzw. Spritzgußform eines nicht gezeigten Spritzgießwerkzeugs, hergestellt.

Zur Herstellung des Verpackungs-Deckels 20 im IML-Verfahren wird eine vorgefertigte, einteilige bzw. aus einem Stück hergestellte Folie 30 aus Kunststoff, bei der es sich bevorzugt um einen einteiligen bzw. aus einem Stück hergestellten Folien-Zuschnitt aus Kunststoff handelt, in eine nicht gezeigte Kavität eines in den Figuren nicht gezeigten offenen Spritzgießwerkzeugs eingelegt und nach dem Schließen des Spritzgießwerkzeugs in dem geschlossenen Spritzgießwerkzeug mit der nicht gezeigten fließfähigen thermoplastischen Kunststoffschmelze derart angespritzt bzw. überspritzt und/oder hinterspritzt, dass aus der fließfähigen thermoplastischen Kunststoffschmelze nach einem Abkühlvorgang der vergleichsweise steife Folien-Träger 31 aus Kunststoff ausgebildet wird.

Erfindungsgemäß wird zur Herstellung des Verpackungs-Deckels 20 die vorgefertigte Folie 30 aus Kunststoff während des Spritzgießens bzw. während der Füllung der Kavität des geschlossenen Sprießgießwerkzeugs mit der fließfähigen thermoplastischen Kunststoffschmelze, in einen dem umlaufenden Deckelteil 24 bzw. Deckelrand zugeordneten, umlaufenden, ringförmigen, geschlossenen, ersten Folienteil 30.1 der Folie 30 und in einen dem Deckel-Zentrum 25 zugeordneten, insbesondere zentralen, zweiten Folienteil 30.2 der Folie 30 getrennt. Dadurch weist der erfindungsgemäß hergestellte bzw. erfindungsgemäße Verpackungs-Deckel 20 den umlaufenden ersten Folienteil 30.1 der Folie 30 und den zweiten Folienteil 30.2 der Folie 30 auf, die durch einen umlaufenden, ringförmigen, geschlossenen und sich von der Folien-Träger-Oberseite 26 quer oder senkrecht nach unten 41 weg erstreckenden Trenn-Rand 34 aus Kunststoff voneinander getrennt in einem radialen Abstand 48 zueinander angeordnet sind. Dabei wird im Zuge des Spritzgießens der umlaufende Trenn-Rand 34 aus der beim Spritzgiessen eingespritzen, fließfähigen, thermoplastischen Kunststoffschmelze gebildet, aus der auch der Folien-Träger 31 ausgebildet wird. Folglich werden bzw. sind der Folien-Träger 31 und der Trenn-Rand 34 aus einem Stück durch Spritzgießen aus demselben Kunststoff hergestellt. Der umlaufende erste Folienteil 30.1 der Folie 30 und der zentrale zweite Folienteil 30.2 der Folie 30 werden bzw. sind an der Folien-Träger-Unterseite 33 des Folien-Trägers 34 unmittelbar an dem Folien-Träger 34 befestigt. Der erste Folienteil 30.1 und der zweite Folienteil 30.2 bilden zusammen mit dem diese Folienteile tragenden Folien-Träger 31 den separat handhabbaren, integralen Verpackungs-Deckel 20 aus.

Bei der Folie 30 bzw. bei dem davon abgetrennten ersten und zweiten Folienteil 30.1, 30.2 der Folie 30 handelt es sich (jeweils) um eine aus mehreren parallelen Schichten 35.1, 35.2, 35.3 bestehende Mehrschicht-Folie 30 aus Kunststoff. Die Mehrschicht-Folie 30 umfasst eine erste Folienschicht 35.1 und eine zweite Folienschicht 35.2. Bei der ersten Foleinschicht 35.1 handelt es sich um eine ablösbare bzw. abziehbare Versiegelungsmasse aus Kunststoff. Bei der zweiten Folienschicht 35.2 handelt es sich um eine Siegelschicht zur Herstellung der Siegelverbindung 28, die, vorzugsweise unter Anwendung eines Ultaschallverfahrens, zwischen dem umlaufenden Deckelteil 24 bzw. Deckelrand und dem umlaufenden Behälterteil 47 bzw. Behälterrand des Verpackungs-Behälters 22 herstellbar ist. Die Siegelschicht 35.2 dient also zum Versiegeln des Verpackungs-Deckels 20 mit dem umlaufenden Behälterteil 47 bzw. Behälterrand des Verpackungs-Behälters 22. Zwischen der jeweiligen ersten Folienschicht 35.1 der in den ersten und zweiten Folienteil 30.1, 30.2 abgetrennten Mehrschicht-Folie 30 und der jeweiligen zweiten Folienschicht 35.2 der in den ersten und zweiten Folienteil 30.1, 30.2 abgetrennten Mehrschicht-Folie 30 kann, wie am Beispiel der Figur 4 gezeigt, jeweils wenigstens eine dritte Folienschicht 35.3 aus Kunststoff angeordnet sein, die sowohl unmittelbar mit der ersten Folienschicht 35.1 als auch unmittelbar mit der zweiten Folienschicht 35.2 fest vebunden ist.

Der Verpackungs-Deckel 20 weist eine Versiegelungszone 36 zum Verbinden oder Zusammenfügen mindestens des umlaufenden Deckelteils 24 bzw. Deckelrands des Verpackungs-Deckels 20 mit dem Behälterteil 47 bzw. Behälterrand des Verpackungs-Behälters 22 auf, wodurch eine ablösbare bzw. abziehbare Versiegelung mit dem Verpackungs-Behälter bereitgestellt wird. Hierzu weist die Versiegelungszone 36 die ablösbare bzw. abziehbare Versiegelungsmasse der ersten Folienschicht 35.1 aus Kunsstoff auf. Zumindest im Bereich des Deckelteils 24 bzw. Deckelrands des Verpackungs-Deckels 20 ist die aus der ablösbaren bzw. abziehbaren Versiegelungsmasse bestehende erste Folienschicht 35.1 der Mehrschicht-Folie 30 auf der Folien-Träger-Unterseite 33 des Folien-Trägers 31 unmittelbar an dem Folien-Träger 31 aus Kunststoff befestigt. Im gezeigten Ausführungsbeispiel sind sowohl der umlaufende erste Folienteil 30.1 der abgetrennten Mehrschicht-Folie 30 als auch der zentrale zweite Folienteil 30.2 der abgetrennten Mehrschicht-Folie 30 auf der Folien-Träger-Unterseite 33 des Folien-Trägers 31 unmittelbar an dem Folien-Träger 31 aus Kunststoff befestigt. Die als Siegelschicht ausgebildete zweite Folienschicht 35.2 sowohl des umlaufenden ersten Folienteils 30.1 der abgetrennten Mehrschicht-Folie 30 als auch des zentralen zweiten Folienteils 30.2 der abgetrennten Mehrschicht-Folie 30 bilden die Deckel-Unterseite 27 des Verpackungs-Deckels 20 aus bzw. begrenzen diese nach unten 41. Dies ermöglicht eine besonders bevorzugte, flexible Anwendung von Ultraschallschweißen zum Versiegeln des Verpackungs-Deckels 20 mit dem Verpackungs-Behälter 22. Vorzugsweise ist die Siegelschicht 35.2 zumindest an der Deckel-Unterseite 27 planeben ausgebildet.

Die ablösbare oder abziehbare oder aufreißbare erste Folienschicht 35.1 aus Kunststoff ist dazu konfiguriert, ausgehend von dem mittels des Verpackungs-Deckels 20 verschlossenen, mitteils der Siegelverbindung 28 hermetisch dicht versiegelten Verpackungs-Behälter 22, ein manuelles Ablösen bzw. Abziehen zumindest eines Verpackungs-Deckel-Teils 37 des umlaufenden Deckelteils 24 bzw. Deckelrands des Verpackungs-Deckels 20 von dem Behälterteil 47 bzw. Behälterrand des Verpackungs-Behälters 22 zu ermöglichen, um einen Zugang zu der Behälteröffnung 23 des Verpackungs-Behälters 22 zu ermöglichen, also um ein Öffnen des Verpackungs-Behälters 22 zu ermöglichen.

Die Versiegelungsmasse bzw. die erste Folienschicht 35.1 wird bzw. ist im gezeigten Ausführungsbeispiel zumindest im Bereich des umlaufenden ersten 24 Deckelteils 24 bzw. Deckelrands des Verpackungs-Deckels 20 auf der Folien-Träger-Unterseite 33 des Folien-Trägers 31 unmittelbar an dem Folien-Träger 31 befestigt.

Der Verpackungs-Deckel 20 weist die Versiegelungszone 36 zum Zusammenfügen bzw. Verbinden mit dem Behälterteil 47 bzw. Behälterrand des Verpackungs-Behälters 22 auf, die dazu konfiguriert ist, ein von dem Verpackungs-Behälter 22 ablösbare bzw. abziehbares Siegel bereitszustellen.

Der Verpackungs-Deckel 20 wird durch Spritzgießen der fließfähigen thermoplastischen Schmelze von einem einzigen, dem Deckel-Zentrum 25 zugeordneten zentralen Anspritzpunkt 38 aus hergestellt. Der Anspritzpunkt 38 ist in Figur 2 angedeutet.

Der Folien-Träger 31 des Verpackungs-Deckels 20 weist eine Grifflasche 39 auf, die dazu konfiguriert ist, ein manuelles Ablösen bzw. Abziehen zumindest des Folien-Trägers 31 zusammen mit dem damit einteilig verbundenen, umlaufenden Trenn-Rand 34 des mit dem Verpackungs-Behälter 22 versiegelten Verpackungs-Deckels 20 zu ermöglichen. Bei der Grifflasche 39 handelt es sich um eine sich von dem Deckel-Zentrum 25 des Verpackungs-Deckels 20 nach außen 59 erstreckende Verlängerung des Folien-Trägers 31.

Wie in den Figuren 1, 6, 7 und 8 angedeutet, kann der Verpackungs-Deckel 20 nicht nur auf seiner Deckel-Unterseite 27 mit einer, vorzugsweise bedruckbaren bzw. bedruckten, Folie 30 aus Kunststoff versehen sein, sondern kann auch auf seiner Deckel-Oberseite 26 mit einer, vorzugsweise bedruckbaren bzw. bedruckten, Folie 30 aus Kunststoff versehen sein. Zur Herstellung eines solchen Verpackungs-Deckels 20 im IML-Verfahren kann von einer, vorzugsweise bedruckbaren bzw. bedruckten, vorgefertigten Folie 30 aus Kunststoff ausgegangen werden, die in zusammengefalteter bzw. zusammengeklappter Form als ein Folieneinleger derart in das nicht gezeigte Spritzgießwerkzeug eingelegt werden kann, dass ein erster Folieneinlegerteil des Folieneinlegers einem zweiten Folieneinlegerteil des Folieneinlegers gegenüberliegt, wobei der erste Folieneinlegerteil der Folie und der zweite Folieneinlegerteil der Folie durch einen Verbindungssteg 57 der Folie 30 einteilig miteinander verbunden sind. Die Herstellung eines solchen Verpackungs-Deckels 20 kann beispielsweise wie in der EP 3 988 272 A1 der Anmelderin offenbart erfolgen.

Wie insbesondere aus Figur 7 ersichtlich, weist der Verpackungs-Deckel 20, mit Ausnahme der Grifflasche 39, eine kreisrunde Außenkontur 40 auf. Der nach unten 41 vorstehende, umlaufende Trenn-Rand 34 des Verpackungs-Deckels 20 weist einen kreisrunden Querschnitt auf (siehe Figur 2). Demgemäß weist der in den Figuren gezeigte Verpackungs-Deckel 20 eine kreisrunde Grund-Form auf. Es versteht sich jedoch, dass der Verpackungs-Deckel auch eine andere Grund-Form aufweisen kann, beispielsweise eine rechteckige oder quadratische Grund-Form. Entsprechendes gilt für die Grund-Form des Verpackungs-Behälters 22 (siehe Figur 5).

Der umlaufende Trenn-Rand 34 des Verpackungs-Deckels 20 ist als ein Klemmrand zum reibschlüssigen und wieder lösbaren Verschließen der Behälteröffnung 23 des in Figur 5 gezeigten Verpackungs-Behälters 22 durch Festklemmen bzw. mittels Klemmkräften an der die Behälteröffnung 23 begrenzenden, umlaufenden Innenwand 42 des Verpackungs-Behälters 22 ausgebildet. Der umlaufende Trenn-Rand 34 ist bevorzugt auch als ein erster Stapelrand zum Stapeln mehrerer gleicher Verpackungs-Deckel 20 aufeinander ausgebildet. Dadurch, dass der umlaufende Trenn-Rand 34 als ein Klemmrand zum reibschlüssigen und wieder lösbaren Verschließen der Behälteröffnung des Verpackungs-Behälters 22 durch Festklemmen bzw. mittels Klemmkräften ausgebildet ist, kann vorteilhaft ein ansonsten für ein Wiederverschließen des Verpackungs-Deckels 20 erforderlicher ganz oder teilweise um das Deckel-Zentrum 25 umlaufender, äußerer bzw. außenseitiger Kragen (nicht gezeigt) zum Festklemmen und/oder Verrasten mit dem umlaufenden Behälterteil bzw. Behälterrand 47 des Verpackungs-Behälters 22 entfallen. Dadurch können Material und Kosten eingespart werden. Es versteht sich jedoch, dass ein erfindungsgemäß hergestellter bzw. erfindungsgemäßer Verpackungs-Deckel auch einen ganz oder teilweise um das Deckel-Zentrum 25 umlaufenden, äußeren bzw. außenseitigen Kragen (nicht gezeigt) zum Festklemmen und/oder Verrasten mit dem umlaufenden Behälterteil 47 bzw. Behälterrand des Verpackungs-Behälters 22 aufweisen kann. In einem solchen Fall kann der Kragen bevorzugt einteilig mit dem Folien-Träger verbunden sein. Hierzu können der Kragen und der Folien-Träger im Zuge des Spritzgießens aus einem Stück, also aus demselben Kunststoff hergestellt werden bzw. sein.

Der als ein Klemmrand und auch als ein erster Stapelrand ausgebildete, umlaufende Trenn-Rand 34 des Verpackungs-Deckels 20 weist ein umlaufendes, ringförmiges, vorzugsweise geschlossenes, freies Stapelrand-Ende 43 auf, das einen Innendurchmesser 44 aufspannt. Der Verpackungs-Deckel 20 weist einen sich von dem ersten Stapelrand 34 in einer Richtung quer oder senkrecht zu dem Folien-Träger von der Folien-Träger-Oberseite weg nach oben 58 erstreckenden, zweiten Stapelrand 45 auf, der einen Außendurchmesser 46 aufspannt. Der Außendurchmesser 46 des zweiten Stapelrands 45 des Verpackungs-Deckels 20 ist geringfügig kleiner als der von dem freien Stapelrand-Ende 43 des ersten Stapelrands 34 aufgespannte Innendurchmesser 44. Dadurch können mehrere gleiche Verpackungs-Deckel 20 gegen ein seitliches Verschieben relativ zueinander transportsicher aufeinander gestapelt werden.

In Figur 5 ist ein Verpackungs-Behälter 22 gezeigt, der eine Behälteröffnung 23 zur Aufnahme von festen, pastösen, fließ- und/oder schöpffähigen Produkten, insbesondere Lebensmittelprodukten aufweist. Der Verpackungs-Behälter 22 weist einen Behälterkorpus 49 auf, der einen Behälterboden 50 und eine sich von diesem quer oder senkrecht nach oben 58 weg erstreckende, umlaufende Behälterwand 51 aufweist. Die umlaufende Behälterwand 51 begrenzt die Behälteröffnung 23. Die Behälterwand 51 weist an ihrem von dem Behälterboden 50 weg weisendenden Behälterwand-Ende 52 einen um die Behälteröffnung 23 umlaufenden, ringförmigen, geschlossenen Behälterrand 47 auf. Der umlaufende Behälterrand 47 erstreckt sich quer oder senkrecht zu der Behälterwand 51 nach außen 59 von dieser weg. Der umlaufende Behälterrand 47 ist auf seiner von dem Behälterboden 50 wegweisenden Oberseite 54 im Wesentlichen flach bzw. planeben ausgebildet. Der umlaufende Behälterrand 47 erstreckt sich ausgehend von dem oberen Behälterwand-Ende 52 der Behälterwand 51 des Behälterkorpus 49 radial nach außen 59 von einem Behälter-Zentrum bzw. von der Zentralachse 55 des Verpackungs-Behälters 22 weg. Der Verpackungs-Behälter 22 ist topfförmig gestaltet. Der Verpackungs-Behälter 22 ist rotationssymmetrisch zu einer das Behälter-Zentrum enthaltenden Behälter-Symmetrieachse gestaltet, bei der es sich um die Zentralachse 55 handelt. Es versteht sich, dass der Verpackungs-Behälter auch anders gestaltet sein kann bzw. eine andere Grund-Form aufweisen kann. Der Verpackungs-Behälter 22 ist mittels des erfindungsgemäßen bzw. erfindungsgemäß hergestellten Verpackungs-Deckels 20 hermetisch dicht zu einer Verpackung 21 versiegelbar.

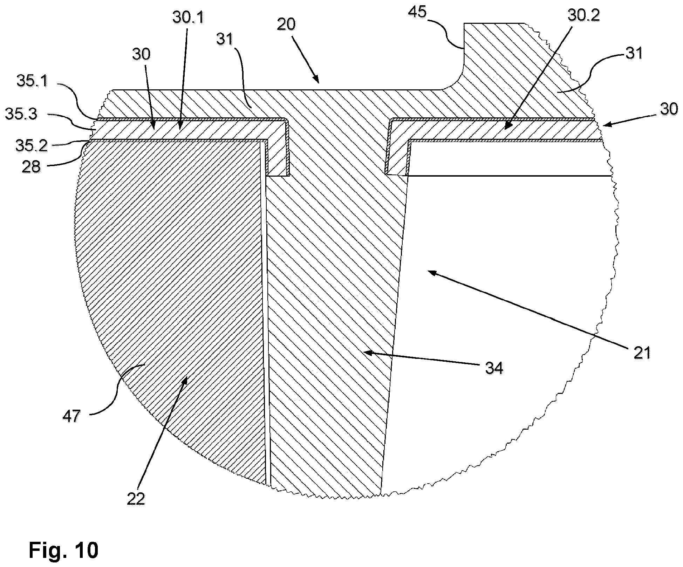

In den Figuren 6 bis 10 ist die Verpackung 21 gezeigt, die den erfindungsgemä-ßen Verpackungs-Deckel 20 bzw. den erfindungsgemäß hergestellten Verpackungs-Deckel 20 und den Verpackungs-Behälter 22 umfasst. Der umlaufende Deckelteil 24 bzw. Deckelrand des Verpackungs-Deckels 20 ist, vorzugsweise unter Anwendung eines Ultaschallverfahrens, insbesonders mittels Ultraschallschweißens, unter Ausbildung der Siegelverbindung mit dem umlaufenden Behälterteil 47 bzw. Behälterrand des Verpackungs-Behälters 22 versiegelt, so dass der Verpackungs-Behälter 22 mittels des Verpackungs-Deckels 20 hermetisch dicht verschlossen, jedoch an dem Verpackungs-Behälter 22 wieder lösbar befestigt ist. Es versteht sich jedoch, dass die Versiegelung auch unter Anwendung eines anderen Verfahrens, insbesondere eines thermischen Verfahrens, beispielswiese mittels thermischen Verschweißens, hergestellt werden kann.

Bei dem mittels des Verpackungs-Deckels 20 zu der Verpackung 21 versiegelten Verpackungs-Behälter 22 liegt der als Klemmrand ausgebildete, umlaufende Trenn-Rand 34 des Verpackungs-Deckels 20 an der die Behälteröffenung 23 radial nach außen 59 begrenzenden Innenwand 42 des Verpackungs-Behälters 22 durch Festklemmen reibschlüssig wieder lösbar an bzw. ist dort unter Ausbildung von Klemmkräften wieder lösbar festgeklemmt.

Wenn bzw. nachdem der Verpackungs-Deckel 20 im Wesentlichen, also zumindest der Folien-Träger 31 und der mit diesem einteilig verbundene Trenn-Rand 34, von dem Verpackungs-Behälter 22 abgelöst bzw. abgezogen worden ist, kann der verbleibende Behälter-Teil des Verpackungs-Behälters 22 mittels des von diesem abgelösten bzw. abgezogenen Deckel-Teils des Verpackungs-Deckels 20 wieder lösbar verschlossen werden. Vereinfacht gesagt, kann nach dem Ablösen bzw. Abziehen des Verpackungs-Deckels 20 von dem Verpackungs-Behälter 22 erneut eine Verpackung ausgebildet werden, die aber dann aus zwei separaten, miteinander nicht stoffschlüssig verbundenen Bauteilen besteht, nämlich aus dem Verpackungs-Behälter 22 und aus dem von diesem abgelösten bzw. abgezogenen und anschließend wieder mit dem Verpackungs-Behälter 22 verschlossenen Verpackungs-Deckel 20. Auch in diesem Fall liegt der als Klemmrand ausgebildete, umlaufende Trenn-Rand 34 des Verpackungs-Deckels 20 an der die Behälteröffenung 23 des Verpackungs-Behälters 22 radial nach außen 59 begrenzenden Innenwand 42 des Verpackungs-Behälters 22 durch Festklemmen reibschlüssig wieder lösbar an bzw. ist dort unter Ausbildung von Klemmkräften wieder lösbar festgeklemmt.

Die erfindungsgmäß hergestellte Verpackung 21 kann erfindungsgemäß derart geöffnet werden, dass zumindest der den Folien-Träger 31 und den mit diesem einteilig verbundenen, umlaufenden Trenn-Rand 34 enthaltenden Verpackungs-Deckel-Teil 37 des umlaufenden Deckelteils 24 bzw. Deckelrands des Verpackungs-Deckels 20 von dem umlaufenden Behälterteil 47 bzw. Behälterrand des Verpackungs-Behälters 22 teilweise oder ganz derart abgelöst oder abgezogen wird, dass dabei der umlaufende erste Folienteil 30.1 der Folie 30, der, in einer ersten Richtung 60 zu dem Deckel-Zentrum 25 hin betrachtet nach innen 60, von dem umlaufenden Trenn-Rand 34 nach innen 60 begrenzt ist, mit dem umlaufenden Behälterteil 47 bzw. Behälterrand des Verpackungs-Behälters 22 versiegelt bleibt, während der zentrale zweite Folienteil 30.2 der Folie 30, der, in einer zweiten Richtung 59 von dem Deckel-Zentrum 25 weg betrachtet, von dem umlaufenden Trenn-Rand 34 nach außen 59 begrenzt ist, unzerstört und mit dem Folien-Träger 31 verbunden bleibt.

Der erfindungsgemäße bzw. erfindungsgemäß hergestellte Verpackungs-Deckel 20 kann aus einem oder mehreren recycelbaren Thermoplasten, insbesondere Polyolefinen, hergestellt sein bzw. bestehen. Dadurch kann der Verpackungs-Deckel 20 sortenrein recycelt werden. Vorzugsweise besteht auch der Verpackungs-Behälter 22 aus einem oder mehreren recycelbaren Thermoplasten, insbesondere Polyolefinen. Dadurch kann der Verpackungs-Behälter 22 sortenrein recycelt werden. Als Polyolefine kommen bevorzugt Polyethylen und/oder Polypropylen in Betracht. Auch wenn mehrere unterschiedliche Polyolefine verwendet werden, ist eine gute Recycelbarkeit gegeben. Wenn bei der aus dem Verpackungs-Deckel 20 und aus dem Verpackungs-Behälter 22 gebildeten Verpackung 21 der Verpackungs-Deckel 20 nicht vollständig abgelöst bzw. abgezogen wird, kann durch die vorgenannten Maßnahmen auch die teilweise geöffnete Verpackung sortenrein recycelt werden. Sortenrein recycelbar sind Polymere derselben Polymer-Gattung, beispielsweise Polyolefine.

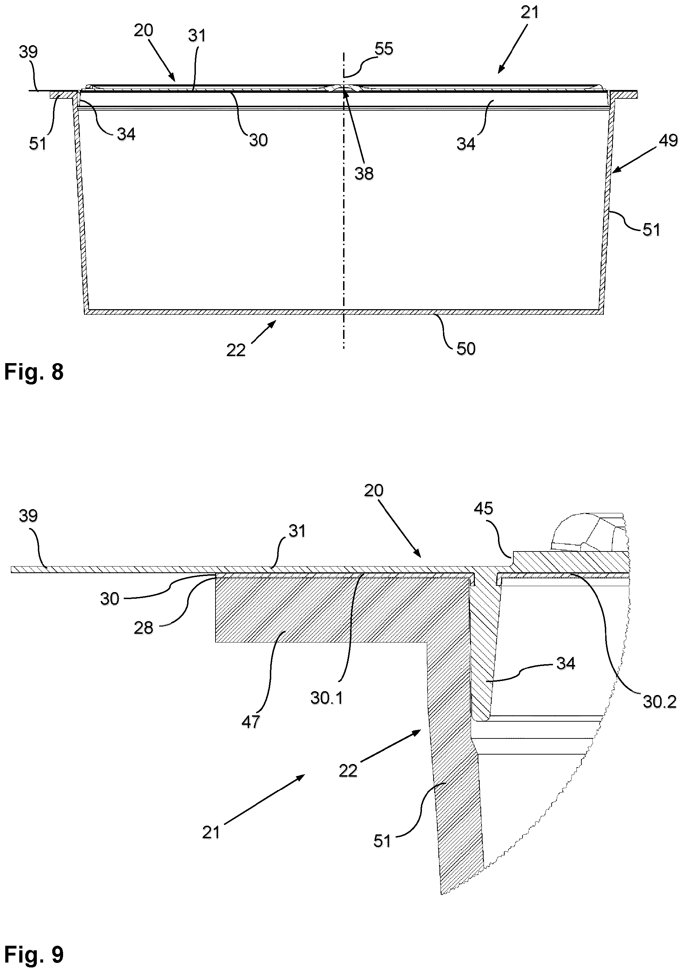

Die Erfindung und Vorteile der Erfindung können auch wie folgt zusammengefasst werden:
- Um die Verbindung zwischen der Platine 20 (Verpackungs-Deckel) und dem Behälter 22 wieder trennbar zu versiegeln, wird bei der Erfindung eine in eine dreidimensionale Platine 20 durch das IML-Verfahren integrierte Folie 30 verwendet. Die Folie 30 ist in dem Behälter-Deckel 20 innenliegend angeordnet und kann gezielt mit unterschiedlichen Eigenschaften für das Ultraschall-Siegeln oder für das thermische Siegeln abgestimmt werden. Die Erfindung unterscheidet sich generell von bekannten Lösungen darin, dass keine Bereiche der IML-Folie 30 von dem Kunststoff des Folien-Trägers 31 ausgespart werden müssen. Somit gibt es keine Wellenbildung und der Rand des Verpackungs-Deckels 20 muss nicht gesondert angespritzt werden. Sämtliche Bereiche der zur Herstellung des Verpackungs-Deckels 20 eingesetzten Kavität bzw. Form des Spritzgießwerkzeugs werden von einem zentralen Anspritzpunkt 38 aus mit fließfähiger Kunststoffmasse gefüllt.
- Das optionale Druckbild auf der innenliegenden Kunststoff-(IML-)Folie 30; 30.1, 30.2 kann durch einen transparenten Kunststoff des Folien-Trägers hindurch von außen sichtbar sein. Den häufig geforderten Lichtschutz der dreidimensionalen Platine 20 übernimmt die IML-Folie 30. Optional kann eine Folie auf der Innenseite für das Versiegeln sowie eine bedruckbare Folie auf der Außenseite vorgesehen sein. Hierzu können entweder zwei separate Folien oder eine geklappte, einteilige Folie 30 vorgesehen sein, beispielsweise wie in der EP 3 988 272 A1 der Anmelderin offenbart.
- Da der Klemmrand 34 des Verpackungs-Deckels 20 normalerweise beim Spritzgießen durch die innenliegende Kunststoff-Folie 30; 30.1, 30.2 nicht ausgeformt werden kann, können die Fließquerschnitte der Kavität des Spritzgießwerkzeugs so gewählt werden, dass die in die Kavität des geschlossenen Spritzgießwerkzeugs eingespritzte thermoplastische Kunststoff-Schmelze, zunächst, insbesondere horizontal, über die zur Ausbildung des Trenn-Rands 34 des Verpackungs-Deckels 20 dienenden, die Kavität begrenzenden Wandteile des Spritzgießwerkzeugs bis zu den zur Ausbildung des Außendurchmessers des Verpackungs-Deckels 20 dienenden, die Kavität begrenzenden Wandteile des Spritzgießwerkzeugs fließt und dann aufgrund des steigenden Schmelze-Drucks der thermoplastischen Kunststoffschmelze die Kunststoff-Folie 30 über eine Werkzeug-Kante 56 (in dem Ausführungsbeispiel gemäß Figur 9 angedeutet) durch die thermoplastische Kunststoffschmelze abgetrennt wird. Somit kann die zur Ausbildung des Folien-Trägers 31 eingespritzte thermoplastische Kunststoffschmelze, die zur Ausbildung des Trenn-Rands 34 vorgesehenen Teile der Kavität des Spritzgießwerkzeugs ausfüllen. Der unterseitige bzw. innenliegende Trenn-Rand 34, der sowohl als ein Klemmrand als auch als ein erster Stapelrand ausgebildet ist, in Verbindung mit dem oberseitigen bzw. außenliegenden zweiten Stapelrand 45 des Verpackungs-Deckels 20 bestimmt die Stapelhöhe pro Verpackungs-Deckel 20 und ermöglicht die seitliche Fixierung von aufeinandergestapelten Verpackungs-Deckeln 20 im Stapel relativ zueinander.
- Eine feste, im Vergleich zu Folien nicht flexible dreidimensionale Platine 20 (Verpackungs-Deckel) ohne unterbrochene Bereiche zur IML-Siegelfolie 30 hin - keine Schrumpfungswellen.
- Untrennbare Siegelverbindung 28 zum Behälter 22.
- Peelbare, also ablösbare bzw. abziehbare Verbindung zwischen dem inneren bzw. innenliegenden ersten Folienteil der beim Spritzgießprozess durch die Ausbildung des Trenn-Rands 34, in die beiden Folienteile 30.1 und 30.2 abgetrennten IML-Folie 30 und dem Behälterrand 47 des Verpackungs-Behälters 20.
- Der innere bzw. innenliegende, zentrale, zweite Folien-Teil 30.2 verbleibt beim Ablösen bzw. Abziehen (unverändert) an dem dreidimensionalen Platinen-Korpus bzw. an dem von dem Behälter abgelösten bzw. abgezogenen Deckel-Teil des Verpackungs-Deckels 20.
- Die vor der Trennung durch den Spritzgussprozess vorgefertigte, einteilige Folie 30 bzw. der vor der Trennung durch den Spritzgussprozess einteilig hergestellte Folienzuschnitt bedeutet einen optimalen Einlegeprozess: einfaches bzw. optimales Handling der in die Kavität des offenen Spritzgießwerkzeugs eingelegten vorgefertigten Folie 30 bzw. des in die Kavität des offenen Spritzgießwerkzeugs eingelegten vorgefertigten Folienzuschnitts.
- Bevorzugt Siegeln bzw. Ausbildung der Siegelverbindung 28 unter Anwendung von Ultraschall (Ultraschall-Siegeln): Zum Öffnen des Verpackungs-Deckels 20 bzw. zum Ablösen des Verpackungs-Deckels 20 von dem Behälterrand 47 des Verpackungs-Behälters 22 wirkt die Funktion F^{Siegelschicht} > F^{Peel-schicht}. Mit anderen Worten gesagt, werden bzw. sind die Siegelschicht 35.2 und ihre Verbindung zu dem Behälterrand 47 des Verpackungs-Behälters 22 einerseits sowie die ablösbare bzw. abziehbare Folienschicht 35.1 und ihre Verbindung zu dem Folien-Träger 31 des Verpackungs-Deckels 20 andererseits derart ausgebildet bzw. aufeinander abgestimmt, dass die Kraft, die zu einem Aufreißen bzw. zu einer Ablösung der Siegelschicht 35.2 von dem Behälterrand 47 des Behälters 22 benötigt wird, größer ist als die Kraft, die zu einem Ablösen bzw. Abziehen bzw. Zerreißen der ablösbaren bzw. abziehbaren Folienschicht 35.2 von dem Folien-Träger 31 benötigt wird.
- Alternativ thermisches Siegeln bzw. thermische Ausbildung der Siegelverbindung: Zum Öffnen wirkt ebenfalls die Funktion F^{Siegelschicht} > F^{Peelschicht}.
- Optional beim thermischen Siegeln: Zum Öffnen des Verpackungs-Deckels bzw. zum Ablösen bzw. Abziehen des Verpackungs-Deckels von dem Behälterrand des Verpackungs-Behälters wirkt die Funktion F^{Siegelschicht} < F^{Peelschicht}. Mit anderen Worten gesagt, werden bzw. sind dann die Siegelschicht und ihre Verbindung zu dem Behälterrand des Verpackungs-Behälters einerseits sowie die ablösbare bzw. abziehbare Folienschicht und ihre Verbindung zu dem Folien-Träger andererseits derart ausgebildet bzw. aufeinander abgestimmt, dass die Kraft, die zu einem Aufreißen bzw. zu einer Ablösung der Siegelschicht von dem Behälterrand des Behälters benötigt wird, kleiner ist als die Kraft, die zu einem Ablösen bzw. Abziehen bzw. Zerreißen der ablösbaren bzw. abziehbaren Folienschicht von dem Folien-Träger benötigt wird.

Die Erfindung ist nicht auf das in den Figuren gezeigte vorteilhafte Ausführungsbeispiel beschränkt. Das vorstehend beschriebene Ausführungsbeispiel kann auch anders als in den beispielhaften Figuren implementiert sein. Die in der Figurenbeschreibung und in den nachfolgenden Ansprüchen verwendeten Bezugszeichen schränken den Schutzumfang der Erfindung nicht ein.

### Bezugszeichenliste

- 20: Verpackungs-Deckel / Behälterdeckel / Verschluss-Deckel / Platine
- 21: Verpackung
- 22: Verpackungs-Behälter / Behälter
- 23: Behälteröffnung
- 24: (umlaufender) Deckelteil /Deckelrand
- 25: Deckel-Zentrum
- 26: Deckel-Oberseite
- 27: Deckel-Unterseite
- 28: Siegelverbindung
- 30: (vorgefertigte) Folie / Mehrschicht-Folie
- 30.1: (umlaufender) erster Folienteil von 30
- 30.2: zweiter Folienteil von 30
- 31: Folien-Träger
- 32: Folien-Träger-Oberseite
- 33: Folien-Träger-Unterseite
- 34: Trenn-Rand / Klemmrand / erster Stapelrand
- 35.1: (ablösbare bzw. abziehbare) erste Folienschicht / Versiegelungsmasse
- 35.2: zweite Folienschicht / Siegelschicht
- 35.3: Zwischenschicht
- 36: Versiegelungszone
- 37: Verpackungs-Deckel-Teil von 24
- 38: (zentraler) Anspritzpunkt
- 39: Grifflasche
- 40: Außenkontur von 20
- 41: nach unten
- 42: (umlaufende) Innenwand von 22
- 43: (freies) Stapelrand-Ende von 34
- 44: Innendurchmesser
- 45: zweiter Stapelrand
- 46: Außendurchmesser
- 47: (umlaufender) Behälterteil / Behälterrand
- 48: (radialer) Abstand
- 49: Behälterkorpus
- 50: Behälterboden
- 51: (umlaufende) Behälterwand
- 52: (oberes) Behälterwand-Ende von 51
- 54: Oberseite von 47
- 55: Zentralachse / Behälter-Symmetrieachse
- 56: Werkzeug-Kante
- 57: Verbindungssteg von 30
- 58: nach oben
- 59: zweite Richtung / nach außen
- 60: erste Richtung / nach innen

## Patentansprüche

1. Verfahren zur Herstellung eines Verpackungs-Deckels (20) für eine Verpackung (21) zum Verschließen einer Behälteröffnung (23) eines Verpackungs-Behälters (22) für die Verpackung (21) zur Aufnahme von festen, pastösen, fließ- und/oder schöpffähigen Produkten, insbesondere Lebensmittelprodukten, wobei der Verpackungs-Deckel (20) dazu konfiguriert ist, an dem Verpackungs-Behälter (22) lösbar befestigt zu werden,
und wobei der Verpackungs-Deckel (20) einen um ein Deckel-Zentrum (25) umlaufenden Deckelteil (24) aufweist, der dazu konfiguriert ist, mittels einer Siegelverbindung (28) mit einem um die Behälteröffnung (23) des Verpackungs-Behälters (22) umlaufenden Behälterteil (47) des Verpackungs-Behälters (22) derart verbunden zu werden, dass der Verpackungs-Behälter (22) durch den Verpackungs-Deckel (20) gegen ein Austreten eines sich in dem Verpackungs-Behälter (22) befindlichen Produkts aus dem Verpackungs-Behälter (22) und/oder gegen einen Zutritt von Stoffen wie Flüssigkeiten, insbesondere Wasser, und/oder Gasen, insbesondere Luft, in den Verpackungs-Behälter (22) dicht verschlossen ist,
und wobei der Verpackungs-Deckel (20) eine Deckel-Oberseite (26) und eine davon wegweisende Deckel-Unterseite (27) aufweist,
und wobei der Verpackungs-Deckel (20) unter Verwendung einer vorgefertigten Folie (30) aus Kunststoff hergestellt wird und einen Folien-Träger (31) aus Kunststoff für die Folie (30) aufweist, der steifer und/oder dicker ist als die Folie (30) aus Kunststoff und der eine der Deckel-Oberseite (26) zugeordnete Folien-Träger-Oberseite (32) und eine davon weg weisende, der Deckel-Unterseite (27) zugeordnete Folien-Träger-Unterseite (33) aufweist, an der die vorgefertigte Folie (30) unmittelbar an dem Folien-Träger (31) durch Über- oder Hinterspritzen mit einer fließfähigen Kunststoffmasse mittels Spritzgießen befestigt wird,
und wobei der Verpackungs-Deckel (22) eine durch die Folie 30 bereitgestellte Versiegelungszone (36) zum Verbinden oder Zusammenfügen mindestens des umlaufenden Deckelteils (24) des Verpackungs-Deckels (20) mit dem umlaufenden Behälterteil (47) des Verpackungs-Behälters (22) aufweist,
**dadurch gekennzeichnet, dass**
die Versiegelungszone (36) eine ablösbare oder abziehbare Versiegelungsmasse (35.1) aufweist, die dazu konfiguriert ist, ausgehend von dem mittels des Verpackungs-Deckels (20) verschlossenen und mitteils der Siegelverbindung (28) dicht versiegelten Verpackungs-Behälter (22) ein Ablösen oder Abziehen zumindest eines Verpackungs-Deckel-Teils (37) des umlaufenden Deckelteils (24) des Verpackungs-Deckels (20) von dem umlaufenden Behälterteil (47) des Verpackungs-Behälters (22) zu ermöglichen und dadurch einen Zugang zu der Behälteröffnung (23) des Verpackungs-Behälters (22) zu ermöglichen, und wobei die Versiegelungsmasse (35.1) zumindest im Bereich des umlaufenden Deckelteils (24) des Verpackungs-Deckels (20) auf der Folien-Träger-Unterseite (33) des Folien-Trägers (31) unmittelbar oder mittelbar an dem Folien-Träger (31) befestigt ist,
wobei
die vorgefertigte Folie 30 aus Kunststoff während des Spritzgießens durch die fließfähige Kunststoffmasse in einen dem umlaufenden Deckelteil (24) zugeordneten, umlaufenden ersten Folienteil (30.1) der Folie 30 und in einen zweiten Folienteil (30.2) der Folie 30 getrennt wird, so dass der Verpackungs-Deckel (20) den umlaufenden ersten Folienteil (30.1) der Folie (30) und den zweiten Folienteil (30.2) der Folie (30) aufweist, die durch einen aus der fließfähigen Kunststoffmasse hergestellten umlaufenden Trenn-Rand (34) aus Kunststoff voneinander getrennt in einem Abstand (48) zueinander angeordnet sind.

2. Verfahren zur Herstellung eines Verpackungs-Deckels nach Anspruch 1, **dadurch gekennzeichnet, dass** der Verpackungs-Deckel (20) durch Spritzgießen einer fließfähigen Kunststoffmasse von einem einzigen Anspritzpunkt (38) aus hergestellt wird.

3. Verpackungs-Deckel,
**dadurch gekennzeichnet**,
das er nach dem Verfahren nach einem der vorstehenden Ansprüche hergestellt ist.

4. Verpackungs-Deckel nach Anspruch 3,
dadurch gekennnzeichnet,
dass es sich bei der Folie (30) aus Kunststoff um eine aus mehreren Schichten bestehende Mehrschicht-Folie handelt, die eine erste Folienschicht (35.1) und eine zweite Folienschicht (35.2) umfasst, wobei es sich bei der ersten Folienschicht (35.1) um die ablösbare oder abziehbare Versiegelungsmasse handelt, und wobei des sich bei der zweiten Folienschicht (35.2) um eine Siegelschicht zur Herstellung der Siegelverbindung (28) zwischen dem umlaufenden Deckelteil (24) und dem umlaufenden Behälterteil (47) des Verpackungs-Behälters (22) handelt.

5. Verpackungs-Deckel nach Anspruch 4,
dadurch gekennnzeichnet,
dass die aus der ablösbaren oder abziehbaren Versiegelungsmasse bestehende erste Folienschicht (35.1) der Mehrschicht-Folie (30) auf der Folien-Träger-Unterseite (33) des Folien-Trägers (31) unmittelbar an dem Folien-Träger (31) befestigt ist und die als Siegelschicht ausgebildete zweite Folienschicht (35.2) der Mehrschicht-Folie (30) die Deckel-Unterseite (27) des Verpackungs-Deckels (20) ausbildet.

6. Verpackungs-Deckel nach einem der Ansprüche 3 bis 5,
**dadurch gekennzeichnet,**
**dass** der umlaufende Trenn-Rand (24) sich quer oder senkrecht zu dem Folien-Träger (31) von der Folien-Träger-Oberseite (32) weg nach unten (41) erstreckt.

7. Verpackungs-Deckel nach einem der Ansprüche 3 bis 6,
dadurch gekennnzeichnet,
dass der umlaufende Trenn-Rand (34) als ein Klemmrand zum reibschlüssigen und wieder lösbaren Verschließen der Behälteröffnung (23) des Verpackungs-Behälters (22) durch Festklemmen ausgebildet ist und/oder
als ein erster Stapelrand zum Stapeln mehrerer gleicher Verpackungs-Deckel (20) aufeinander ausgebildet ist.

8. Verpackungs-Deckel nach Anspruch 7,
dadurch gekennnzeichnet,
dass der erste Stapelrand (34) ein umlaufendes freies Stapelrand-Ende (43) aufweist, das einen Innendurchmesser (44) aufspannt, und dass der Verpackungs-Deckel (22) einen sich von dem ersten Stapelrand (34) weg nach oben erstreckenden, zweiten Stapelrand (45) aufweist, der einen Außendurchmesser (46) aufspannt, der geringfügig kleiner ist als der von dem freien Stapelrand-Ende (43) des ersten Stapelrands (34) aufgespannte Innendurchmesser (44).

9. Verfahren zur Herstellung einer Verpackung, umfassend einen Verpackungs-Deckel (20) nach einem der Ansprüche 3 bis 8 und umfassend einen Verpackungs-Behälter (23) mit einer Behälteröffnung (23) zur Aufnahme von festen, pastösen, fließ- und/oder schöpffähigen Produkten, insbesondere Lebensmittelprodukten,
**dadurch gekennzeichnet,**
**dass** der Verpackungs-Behälter (22) einen um seine Behälteröffnung (23) umlaufenden Behälterteil (47) aufweist und der Verpackungs-Deckel (20) den um das Deckel-Zentrum (25) und um die Behälteröffnung (23) umlaufenden Deckelteil (24) aufweist, der an dem umlaufenden Behälterteil (47) des Verpackungs-Behälters (22) wieder lösbar befestigt wird, wobei der umlaufende Deckelteil (24) des Verpackungs-Deckels (20) unter Ausbildung der Siegelverbindung (28) mit dem umlaufenden Behälterteil (47) des Verpackungs-Behälters (22) versiegelt wird, so dass der Verpackungs-Behälter (22) mittels des Verpackungs-Deckels (20) dicht verschlossen wird oder ist, der an dem Verpackungs-Behälter (22) wieder lösbar befestigt wird oder ist.

10. Verpackung,
dadurchgekennzeichnet,
dass sie nach dem Verfahren nach Anspruch 9 hergestellt ist.

11. Verpackung nach Anspruch 10,
**dadurch gekennzeichnet,**
**dass** der als ein Klemmrand ausgebildete, umlaufende Trenn-Rand (24) des Verpackungs-Deckels (20) an einer die Behälteröffenung (23) nach außen (59) begrenzenden Innenwand (42) des Verpackungs-Behälters (20) durch Festklemmen reibschlüssig wieder lösbar anliegt.

12. Verfahren zum Öffnen der Verpackung nach Anspruch 10 oder 11,
**dadurch gekennzeichnet,**
**dass** zumindest ein den Folien-Träger (31) und den mit diesem einteilig verbundenen, umlaufenden Trenn-Rand (34) enthaltenden Verpackungs-Deckel-Teil (37) des Verpackungs-Deckels (20) von dem umlaufenden Behälterteil (47) des Verpackungs-Behälters (23) teilweise oder ganz derart abgelöst oder abgezogen wird, dass dabei der umlaufende erste Folienteil (30.1) der Folie (30), der, in einer ersten Richtung (60) zu dem Deckel-Zentrum (25) hin betrachtet, von dem umlaufenden Trenn-Rand (24) nach innen (60) begrenzt ist, zumindest teilweise mit dem umlaufenden Behälterteil (47) des Verpackungs-Behälters (22) versiegelt bleibt, während der zweite Folienteil (30.2) der Folie (30), der, in einer zweiten Richtung (59) von dem Deckel-Zentrum (25) weg betrachtet, von dem umlaufenden Trenn-Rand (24) nach außen (59) begrenzt ist, mit dem Folien-Träger (31) verbunden bleibt.

## Claims

1. Method for producing a packaging closure (20) for a packaging item (21) for closing a container opening (23) of a packaging container (22) for the packaging item (21) intended to accommodate solid, paste-like, fluid and/or scoopable products, in particular food products, wherein the packaging closure (20) is configured to be fastened detachably to the packaging container (22),
and wherein the packaging closure (20) has a closure element (24) that encircles a closure centre (25) and is configured to be connected to a container element (47) of the packaging container (22) that encircles the container opening (23) of the packaging container (22) by means of a sealing connection (28) in such manner that the packaging container (22) is closed in sealing manner by the packaging closure (20), preventing the escape of a product inside the packaging container (22) from the packaging container (22) and/or infiltration of substances such as liquids, in particular water, and/or gases, in particular air, into the packaging container (22),
and wherein the packaging closure (20) has a closure upper side (26) and a closure underside (27) facing away therefrom,
and wherein the packaging closure (20) is produced using a prefabricated plastic film (30) and has a plastic film carrier (31) for the film (30) that is stiffer and/or thicker than the plastic film (30) and has a film carrier upper side (32) attached to the closure upper side (26) and a film carrier underside (33) which faces away therefrom and is attached to the closure underside (27), by which the prefabricated film (30) is fastened directly to the film carrier (31) by overmoulding or backmoulding with a flowable plastic mass in an injection moulding process,
and wherein der packaging closure (22) has a sealing zone (36) provided by the film (30) for connecting or joining at least the encircling closure element (24) of the packaging closure (20) with the encircling container element (47) of the packaging container (22),
**characterized in that**
the sealing zone (36) contains a sealing compound (35.1) that can be detached or pulled off, and is configured to enable at least one packaging closure element (37) of the encircling closure element (24) of the packaging closure (20) to be detached or pulled off from the encircling container element (47) of the packaging container (22) starting from the packaging container (22) that is closed by means of the packaging closure (20) and sealed impermeably by means of the sealing connection (28), and thereby allowing access to the container opening (23) of the packaging container (22),
and wherein the sealing compound (35.1) is fastened directly or indirectly to the film carrier (31) at least in the region of the encircling closure element (24) of the packaging closure (20) on the film carrier underside (33) of the film carrier (31),
wherein
during the injection moulding the prefabricated plastic film (30) is separated by the flowable plastic mass into a first, encircling film element (30.1) of the film (30) attached to the encircling closure element (24) and a second film element (30.2) of the film (30), so that the packaging closure (20) includes the encircling first film element (30.1) of the film (30) and the second film element (30.2) of the film (30), which are arranged at a distance (48) with respect to one another due to an encircling plastic separation border (34) produced from the flowable plastic mass.

2. Method for producing a packaging closure according to Claim 1, **characterized in that** the packaging closure (20) is produced by injection moulding of a flowable plastic mass out of a single gate (38).

3. Packaging closure,
**characterized in that**
it is produced according to the method according to one of the preceding claims.

4. Packaging closure according to Claim 3,
**characterized in that**
the plastic film (30) is a multilayer film consisting of multiple layers, which comprises a first film layer (35.1) and a second film layer (35.2), wherein the first film layer (35.1) is the sealing compound that can be detached or pulled off, and wherein the second film layer (35.2) is a sealing layer for creating the sealing connection (28) between the encircling closure element (24) and the encircling container element (47) of the packaging container (22).

5. Packaging closure according to Claim 4,
**characterized in that**
the first film layer (35.1) of the multilayer film (30), consisting of the sealing compound that can be detached or pulled off, is fastened directly to the film carrier (31) on the film carrier underside (33) of the film carrier (31), and the second film layer (35.2) of the multilayer film (30) embodied as a sealing layer forms the closure underside (27) of the packaging closure (20).

6. Packaging closure according to any one of Claims 3 to 5,
**characterized in that**
the encircling separation border (24) extends downwards (41) away from the film carrier upper side (32) transversely or perpendicularly to the film carrier (31).

7. Packaging closure according to any one of Claims 3 to 6,
**characterized in that**
the encircling separation border (34) is designed as a clamping border for the frictionally engaged and re-detachable closure of the container opening (23) of the packaging container (22) by clamping,
and/or
is designed as a first stacking border for stacking multiple identical packaging closures (20) one on top of the other.

8. Packaging closure according to Claim 7,
**characterized in that**
the first stacking border (34) has an encircling free stacking border end (43) that encompasses an internal diameter (44), and that the packaging closure (22) has a second stacking border (45) that extends upwards away from the first stacking border (34), which second stacking border encompasses an external diameter (46) which is slightly smaller than the internal diameter (44) encompassed by the free stacking border end (43) of the first stacking border (34).

9. Method for producing a packaging item that comprises a packaging closure (20) according to any one of Claims 3 to 8 and that comprises a packaging container (23) with a container opening (23) for accommodating solid, paste-like, fluid and/or scoopable products, in particular food products,
**characterized in that**
the packaging container (22) has a container element (47) encircling its container opening (23), and the packaging closure (20) includes the closure element (24) that encircles the closure centre (25) and the container opening (23), and which is fastened to the encircling container element (47) of the packaging container (22) so as to be detachable again, wherein the encircling closure element (24) of the packaging closure (20) is sealed with the encircling container element (47) of the packaging container (22), forming the sealing connection (28), so that the packaging container (22) is or has been sealed impermeably by means of the packaging closure (20) that is or has been fastened detachably to the packaging container (22).

10. Packaging item,
**characterized in that**
it is produced according to the method according to Claim 9.

11. Packaging item according to Claim 10,
**characterized in that**
the encircling separating border (24) of the packaging closure (20), designed as a clamping border, bears on an inner wall (42) of the packaging container (20) that outwardly (59) delimits the container opening (23) frictionally by clamping so as to be detachable again.

12. Method for opening the packaging item according to Claim 10 or 11,
**characterized in that**
at least one packaging closure element (37) of the packaging closure (20) containing the film carrier (31) and the encircling separating border (34) connected integrally thereto is partially or completely detached or pulled away from the encircling container element (47) of the packaging container (23) in such manner that in the process the encircling first film element (30.1) of the film (30), which, viewed in a first direction (60) towards the closure centre (25), is bounded inwardly (60) by the encircling separating border (24), remains at least partially sealed with the encircling container element (47) of the packaging container (22), while the second film element (30.2) of the film (30), which, viewed in a second direction (59) away from the closure centre (25), is bounded outwardly (59) by the encircling separation border (24), remains attached to the film carrier (31).

## Revendications

1. Procédé de fabrication d'un couvercle d'emballage (20) pour un emballage (21) destiné à fermer une ouverture de récipient (23) pour un récipient d'emballage (22) pour l'emballage (21) destiné à recevoir des produits solides, pâteux, coulants et/ou susceptibles d'écoulement, notamment des produits alimentaires, le couvercle d'emballage (20) étant configuré pour être fixé de manière amovible au récipient d'emballage (22),
et le couvercle d'emballage (20) présentant une partie couvercle (24) entourant un centre de couvercle (25) et qui est configurée pour être reliée par une liaison de scellement (28) à une partie contenant (47) du récipient d'emballage (22) entourant l'ouverture (23) du récipient d'emballage (22) de manière à ce que le récipient d'emballage (22) soit fermé hermétiquement par le couvercle d'emballage (20) pour éviter la fuite d'un produit se trouvant dans le récipient d'emballage (22) hors du récipient d'emballage (22) et/ou pour éviter l'entrée de substances telles que des liquides, en particulier de l'eau, et/ou des gaz, en particulier de l'air, dans le récipient d'emballage (22),
et le couvercle d'emballage (20) présentant un dessus de couvercle (26) et un dessous de couvercle (27) détourné de celui-ci,
et le couvercle d'emballage (20) étant fabriqué en plastique à l'aide d'un film préfabriqué (30) et comportant pour le film (30) un support de film plastique (31) qui est plus rigide et/ou plus épais que le film plastique (30) et qui présente un dessus de support de film (32) associé au dessus de couvercle (26) et un dessous de support de film (33) détourné de celui-ci et associé au-dessous de couvercle (27) auquel le film préfabriqué (30) est directement fixé au support de film (31) par sur-injection ou contre-injection d'une masse plastique fluide par moulage par injection,
et le couvercle d'emballage (22) présentant une zone de scellement (36) formée par le film (30) pour relier ou assembler au moins la partie couvercle périphérique (24) du couvercle d'emballage (20) avec la partie contenant périphérique (47) du récipient d'emballage (22),
**caractérisé en ce que**
la zone de scellement (36) présente une masse d'étanchéité (35.1) détachable ou amovible, qui est configurée pour permettre, en partant du récipient d'emballage (22) fermé hermétiquement au moyen du couvercle d'emballage (20) et au moyen de la liaison de scellement (28), un détachement ou un retrait d'au moins une partie couvercle d'emballage (37) de la partie couvercle périphérique (24) du couvercle d'emballage (20) de la partie contenant périphérique (47) du récipient d'emballage (22) et permettre ainsi l'accès à l'ouverture (23) du récipient d'emballage (22), et la masse d'étanchéité (35.1) étant fixée directement ou indirectement sur le support de film (31) au moins dans la zone de la partie couvercle périphérique (24) du couvercle d'emballage (20) sur le dessous de support de film (33) du support de film (31),
le film préfabriqué de matière plastique (30) étant séparé lors du moulage par injection par la masse plastique fluide en une première partie de film périphérique (30.1) du film (30) associée à la partie couvercle périphérique (24) et en une deuxième partie de film (30.2) du film (30), de sorte que le couvercle d'emballage (20) comprend la première partie de film périphérique (30.1) du film (30) et la seconde partie de film (30.2) du film (30), qui, en étant séparées l'une de l'autre l'une de l'autre par un bord de séparation périphérique (34) constitué de la masse plastique fluide en matière plastique, sont disposés à distance (48) l'une de l'autre.

2. Procédé de fabrication d'un couvercle d'emballage selon la revendication 1,
**caractérisé en ce que**
le couvercle d'emballage (20) est fabriquée par moulage par injection d'un composé plastique fluide depuis un seul point d'injection (38).

3. Couvercle d'emballage,
**caractérisé en ce**
**qu'**il est fabriqué selon le procédé selon l'une quelconque des revendications précédentes.

4. Couvercle d'emballage selon la revendication 3,
**caractérisé en ce que**
le film plastique (30) est un film multicouche constitué de plusieurs couches, comprenant une première couche de film (35.1) et une deuxième couche de film (35.2), la première couche de film (35.1) étant la masse d'étanchéité amovible ou pelable, et la seconde couche de film (35.2) étant une couche de scellement pour établir la liaison de scellement (28) entre la partie de couvercle (24) périphérique et la partie contenant périphérique (47) du récipient d'emballage (22).

5. Couvercle d'emballage selon la revendication 4,
**caractérisé en ce que**
la première couche de film (35.1) du film multicouche (30) constitué de la masse d'étanchéité détachable ou pelable est fixée directement sur le dessous de support de film (33) du support de film (31) au niveau du support de film (31) et que la seconde couche de film (35.2) réalisée sous forme de couche d'étanchéité du film multicouche (30) forme le dessous de couvercle (27) du couvercle d'emballage (20).

6. Couvercle d'emballage selon l'une quelconque des revendications 3 à 5,
**caractérisé en ce que**
le bord de séparation périphérique (24) s'étend transversalement ou perpendiculairement au support de film (31) depuis le dessus de support de film (32) vers le bas (41).

7. Couvercle d'emballage selon l'une quelconque des revendications 3 à 6,
**caractérisé en ce que**
le bord de séparation périphérique (34) est réalisée sous forme d'un bord de serrage pour la fermeture sans frottement et dissociable de l'ouverture (23) du récipient d'emballage (22) par serrage
et/ou est réalisé sous forme d'un premier bord d'empilage pour empiler plusieurs couvercles d'emballage identiques (20) les uns sur les autres.

8. Couvercle d'emballage selon la revendication 7,
**caractérisé en ce que**
le premier bord d'empilage (34) comporte une extrémité libre périphérique de bord d'empilage (43) qui s'étend sur un diamètre intérieur (44), et que le couvercle d'emballage (22) comporte un second bord d'empilage (45) qui s'étend du premier bord d'empilage (34) vers le haut et dont le diamètre extérieur (46) est légèrement inférieur à celui du diamètre intérieur (44) de l'extrémité libre (43) du premier bord d'empilage (34).

9. Procédé de fabrication d'un emballage comprenant un couvercle d'emballage (20) selon l'une quelconque des revendications 3 à 8 et comprenant un récipient d'emballage (23) avec une ouverture de récipient (23) pour recevoir des produits solides, pâteux, coulants et/ou susceptibles d'écoulement, en particulier des produits alimentaires,
**caractérisé en ce que**
le récipient d'emballage (22) comporte une partie contenant (47) entourant son ouverture du récipient (23) et que le couvercle d'emballage (20) comporte la partie couvercle (24) entourant le centre du couvercle (25) et entourant l'ouverture du récipient (23), qui est fixée de manière amovible à la partie contenant périphérique (47) du récipient d'emballage (22), la partie couvercle périphérique (24) du couvercle d'emballage (20) étant scellée avec la partie contenant périphérique (47) du récipient d'emballage (22) en établissant la liaison de scellement (28), de sorte que le récipient d'emballage (22) se ferme ou est fermé hermétiquement au moyen du couvercle d'emballage (20) qui se fixe ou est fixé de manière amovible au récipient d'emballage (22).

10. Emballage,
**caractérisé en ce**
**qu'**il est fabriqué selon le procédé selon la revendication 9.

11. Emballage selon la revendication 10,
**caractérisé en ce que**
le bord de séparation périphérique (24) du couvercle d'emballage (20), réalisé sous forme d'un bord de serrage, est appliqué par serrage par correspondance de frottement et de manière amovible contre une paroi intérieure (42) du récipient d'emballage (20) délimitant l'ouverture du récipient (23) vers l'extérieur (59).

12. Procédé pour ouvrir l'emballage selon la revendication 10 ou 11,
**caractérisé en ce**
**qu'**au moins l'un des supports de film (31) et le bord de séparation périphérique (34) solidaire de celui-ci et contenant la partie couvercle d'emballage (37) du couvercle d'emballage (20) sont partiellement ou complètement dissociés ou extraits de la partie contenant périphérique (47) du récipient d'emballage (23), que la première partie du film (30.1) entourant le film (30), qui, vu dans une première direction (60) vers le centre du couvercle (25), est délimitée vers l'intérieur (60) par le bord de séparation périphérique (24), reste au moins partiellement scellé avec la partie contenant périphérique (47) du récipient d'emballage (22), tandis que la seconde partie de film (30.2) du film (30), qui, vue dans une seconde direction (59) opposée au centre du couvercle (25), est délimitée vers l'extérieur (59) par le bord de séparation périphérique (24), reste reliée au support de film (31).
